# EUROPEAN PATENT SPECIFICATION

(11) **EP 1 495 997 B1**
(45) Date of publication and mention of the grant of the patent: **26.08.2009**
(21) Application number: 04254110.2
(22) Date of filing: 08.07.2004
(51) Int. Cl.: B65G 35/08, B65B 43/48, B67C 7/00

(54) **Chainless container transport device**
Kettenlose Behälterfördervorrichtung
Dispositif de transport de récipients sans chaîne

(30) Priority: 09.07.2003 JP 2003272508
(43) Date of publication of application: 12.01.2005
(73) Proprietor: Shikoku Kakoki Co., Ltd., Itano-gun, Tokushima-ken 771-0202 (JP)
(72) Inventor: Hara, Toshiyuki c/o Shikoku Kakaki Co., LTD, Itano-gun Tokushima-ken 771-0202 (JP); Sawabuchi, Takahiro c/o Shikoku Kakaki Co., LTD, Itano-gun Tokushima-ken 771-0202 (JP)
(74) Representative: Illingworth-Law, William Illingworth

(56) References cited:
- EP-A1- 0 995 700
- WO-A-01/74691
- DE-U- 20 010 791
- FR-A- 2 444 535
- FR-A- 2 738 805
- US-B1- 6 431 227

## Description

### Technical Field

The present invention relates to a container transport device which is mounted for example on a filling and packaging machine which fills contents in containers and seals the containers with lid members.

### Background Art

Conventionally, as a container transport device which is mounted on a filling and packaging machine which fills contents in preformed containers and seals the containers with lid members, a container transport device having the following constitution has been known. That is, the container transport device includes a plurality of container holders which are capable of holding one or a plurality of containers and a transport passage which sequentially guides the plurality of container holders to respective treatment stations, wherein the container holders are fixed between a pair of endless chains and the container holders are sequentially guided in the transport passage along an endless passage formed by the endless chains (see Japanese Laid-open Utility Model Application No. for example).

Further, with respect to a filling and packaging machine in which containers are fed by a container feeding device which is provided along with a transport passage of container holders, goods are filled in the inside of the containers using a filler, the containers are covered with cover films and the containers and the covers are sealed by adhesion using a sealing device. There has been also known a container transport device which has the following constitution (see Japanese Laid-open Patent Publication No. 1997-95306, for example). That is, the packaging transport device is configured such that the container holders are transportable by being engaged with an endless chain, each container holder is intermittently transported to a given position in a state that the container holder is spaced apart from other neighboring container holders in the transport direction, some treatment among given treatment are applied to the container holder in the midst of the transportation and, thereafter, the container holders are intermittently fed by releasing the engagement between the container holders and the endless chain so as to bring the neighboring holders in the transport direction in contact with each other while setting a width of the container holder in the transport direction to one pitch, and the remaining treatment among the given treatment are performed in the midst of the transport passage. Accordingly, it is possible to accelerate the container holder exchanging operation which becomes necessary when the shape of the container has to be changed and to save the cost for the cover films.

On the other hand, with respect to a chain conveyor which is used as a container transport conveyor, it has been known that along with the use of an endless chain for a long period, the endless chains are worn and the endless chain is elongated. For example, a roller chain is constituted by sequentially combining pin links and roller links, wherein each pin link includes a pair of pin link plates which are arranged in parallel and two pins which respectively connect corresponding ends of the pin link plates, each roller link includes a pair of roller link plates which are arranged in parallel, two bushings which connect corresponding ends of roller link plates and rollers which are rotatably fitted on the bushings, and the bushings of the roller link are rotatably fitted on the pins of the pin link. Accordingly, the pin and the bushing which respectively constitute slide portions are brought into contact with each other in use and hence, the pin and the bushing are worn thus decreasing the thickness of the pin and the thickness of the bushing whereby the elongation of the endless chain is generated. When the elongation of the endless chain is generated, the center position of the container holder is displaced in the transport direction thus giving rise to various drawbacks such as the seizure of endless chain into a sprocket wheel or a conveyor rail at the time of transportation and the leaking of liquid from the container after filling besides the displacement of centering between the device such as the filling device operable in a group of respective devices and the container. Particularly, with respect to the displacement of centering, this displacement is absorbed by moving the filling device or the like in the transport direction. However, there exists a limit with respect to the absorption of the displacement and hence, when the absorption of the displacement reaches the limit, it is determined that the lifetime of the endless chain has almost run down and the endless chain is exchanged.

The following documents disclosed all a chainless container transport device according to the preamble of claim 1.

A conveying device comprising a packages carrier for intermittently conveying packages underneath various treatment stations was described in patent WO 01/74691A (Tetra Laval) dated 11 October 2001.

Patent Application FR-A-2738805 (Lemouzy Etienne) dated 21 March 1997 disclosed a transport device for variously shaped items for the purpose of later conditioning.

A disclosure of a device for filling containers comprising a conveyor system for intermittently conveying the containers along a conveyor path is also provided in US-B-64312271 (Ter Haar Robbert) dated 13 August 2002.

Further, a description of a transport device for packing plant for food can be found in DE 20010791 U (Buhmann Systeme) dated 16 November 2000.

Finally, Patent Application FR-A-2444535 (Reymond Jean) dated 18 July 1980 discloses transfer devices for transferring items on an automated machine from one treatment station to another.

### Disclosure of the Invention

To explain the recent status or development of the filling and packaging machine of this type, the ability of the machine has been further enhanced (speeding up of the operations) without changing the number of rows and feeding pitch of the endless chain and hence, a time cycle of the intermittent operations of the conveyor is shortened. To perform given feeding of containers, filling of contents, and sealing containers with lid members within this short time cycle, particularly within a short intermittent stop time, sections such as feeding of containers, filling of contents, and sealing containers with lid members and the like are provided in plural numbers. The provision of a plural number of sections such as filling of contents, sealing of containers, sterilization and the like inevitably leads to the elongation of the length of the machine. In recent filling and packaging machines of this type having the elongated machine length, to enhance the ability (speeding up of the operations) of the machine, it is necessary to increase as much as possible the positioning accuracy of the container holders transported to respective stations such as feeding of the containers, filling of contents, sealing of the containers with lid members. However, so long as the endless chain is used as in the case of the related art in the transport conveyor of the container holders, in spite of all efforts, it is impossible to obviate drawbacks attributed to the elongation of the endless chain due to the use thereof, that is, the necessity of periodical adjustment of the endless chain at the respective station positions for holding the positional accuracy of centering of the container holder transported to respective stations such as feeding of the containers, filling of contents in the containers, sealing of the containers with lid members and the like as accurately as possible or the exchange of the endless chain. Particularly, in the conventional container transport conveyor device, it is necessary to mount a drive source (a drive shaft and a driven sprocket wheel of the endless chain) at the downstream-side end portion of the transport passage. In this case, the positional displacement of the container holder attributed to the elongation of the chain noticeably appears at a position remote from the drive source of the transport device, that is, at the starting-end side of the transport passage. Accordingly, the positional displacement is most likely to occur with respect to the container holder which constitutes the treatment device positioned at the furthermost starting-end side of the transport passage and this causes a crucial drawback. Further, there exists the limitation with respect to the adjustment operation of the positional displacement thus giving rise to the drawback that the chain which is elongated exceeding the adjustment limit must be replace with a new chain. Still further, since the chain has a play at each link portion, the chain also has the drawback that the chain exhibits poor stop position accuracy of a product to be transported.

The present invention has been made in view of such circumstances and it is an object of the present invention to provide a container transport device which can fundamentally obviate drawbacks which are inevitably generated due to the use of an endless chain attributed to the elongation and the structure of the endless chain in a container transport conveyor of a conventional filling and packing machine and, at the same time, can improve the positional accuracy of container holders which are transported to respective stations such as feeding of containers, filling of contents to the containers, sealing of the container with lid members and the like in the filling and packaging machine.

The inventors of the present invention have made extensive studies to overcome the above-mentioned drawbacks and have produced various types of container transport chain conveyors with respect to materials, structures and the like of the endless chain and also with respect to tension imparting devices which absorb the elongation of the endless chain or the like. However, the inventors have reached the conclusion that so long as the container transport device uses the endless chain, the fundamental solution cannot be obtained and have made extensive studies to develop a chainless container transport device which uses no chain and have confirmed the following and have completed the present invention. That is, when the inventors have actually produced the chainless container transport device provided with a circulation system of container holders in which a plurality of plate-like container holders which hold containers are sequentially and intermittently transported over an outgoing holder support rail at a given pitch in the transport direction from an upstream-side end portion of the outgoing holder support rail using container holder feeding means, the container holders which are transported to a downstream side end portion of the outgoing holder support rail are transferred to an upstream end portion of an incoming holder support rail, subsequently, the container holder at the upstream-side end portion of the incoming holder support rail is transferred to a downstream end portion of the incoming holder support rail using container holder the incoming holder support rail using container holder feeding means, and the container holder transported to the downstream end portion of the incoming holder support rail is transferred to the upstream-side end portion of the outgoing holder support rail, it is confirmed that the containers can be accurately transported without using the endless chain and, at the same time, without the time-sequential positional displacement.

The object of the invention is achieved by the chainless container transport device of claim 1.

According to the chainless container transport device of the present invention, since the endless chain is not used for the transport of the plurality of container holders which are supported on the holder support members, the chainless container transport device can fundamentally obviate drawbacks which are inevitably generated due to the use of an endless chain attributed to the elongation and the structure of the endless chain in a container transport conveyor of a conventional filling and packing machine and, at the same time, can improve the positional accuracy of container holders which are transported to respective stations such as feeding of containers, filling of contents to the containers, sealing of the containers with lid members and the like in the filling and packaging machine whereby it is possible to perform processing such as feeding of containers, filling of contents to the containers, sealing of containers with the lid means in an efficient and stable manner.

### Brief Description of Drawings

Fig. 1 is a schematic side view of a filling and packaging device provided with a chainless container transport device according to one embodiment of the present invention;
Fig. 2 is a schematic plan view of the filling and packaging device shown in Fig. 1;
Fig. 3A to Fig. 3C are schematic explanatory views of holder feeding means adopting a latchet pawl method in the chainless container transport device according to one embodiment of the present invention, wherein Fig. 3A is a plan view, Fig. 3B is a side view and Fig. 3C is a front view;
Fig. 4A to Fig. 4C are schematic explanatory views of holder feeding means adopting a rotary pawl method in the chainless container transport device according to one embodiment of the present invention, wherein Fig. 4A is a plan view, Fig. 4B is a side view and Fig. 4C is a front view;
Fig. 5A to Fig. 5C are schematic explanatory views of a modification of the holder feeding means adopting a rotary pawl method in the chainless container transport device according to one embodiment of the present invention, wherein Fig. 5A is a plan view, Fig. 5B is a side view and Fig. 5C is a front view;
Fig. 6A to Fig. 6C are schematic explanatory views of holder feeding means adopting a box motion pawl method in the chainless container transport device according to one embodiment the present invention, wherein Fig. 6A is a plan view, Fig. 6B is a side view and Fig. 6C is a front view;
Fig. 7A to Fig. 7C are schematic explanatory views of holder feeding means adopting a sprocket wheel method in the chainless container transport device according to one embodiment of the present invention, wherein Fig. 7A is a plan view, Fig. 7B is a side view and Fig. 7C is a front view;
Fig. 8A to Fig. 8C are schematic explanatory views of holder feeding means adopting a screw method in the chainless container transport device according to one embodiment of the present invention, wherein Fig. 8A is a plan view, Fig. 8B is a side view and Fig. 8C is a front view;
Fig. 9 is a schematic side view of first transfer means adopting a sprocket wheel method in the chainless container transport device of the present invention;
Fig. 10 is a schematic side view of transfer means adopting a rotary elevator method ;
Fig. 11 is a schematic side view of transfer means adopting a Ferris wheel method ; and
Fig. 12 is a schematic side view of transfer means adopting a semicircular guide rail method.

### Explanation of letters or numerals

1. chainless container transport device
2. support strut
3. device body portion
4. container supply device
5. foreign material removing device
6. filling device
7. sealing device
8. trimming device
9. container take out device
10. container holder
11. opening of the container holder
12. projecting portion
13. thread engage portion
14. outgoing holder support member
15. incoming holder support member
20. holder feeding means
21. holder engaging and pushing member
22. ratchet pawl of the holder engaging and pushing member
23. rotary pawl of the holder engaging and pushing member
24. box motion pawl of the holder engaging and pushing member
25. a pair of discs of the holder feeding means
26. recessed portion of a pair of discs of the holder feeding means
27. screw member
28. crest of thread of the screw member
29. groove of thread of the screw member
30. first transfer means
31. a pair of discs of the first transfer means
32. recessed portion of a pair of discs of the first transfer means
33. pulley
34. holder accommodating portion
35. endless belt
36. rotary body
37. inner guide member
38. outer guide member
39. second transfer means

### Best Mode of Carrying Out the Invention

First of all, the basic technical concept of the present invention is described.

The chainless container transport device of the present invention can be used in a mode that the container transport device is mounted on a filling and packaging machine which fills and packages contents in containers held by container holders, a sterilization device which sterilizes containers and the like, for example.

Here, "chainless" in the chainless container transport device of the present invention implies that the endless chain is not used for transporting the plurality of container holders which are supported by the holder support members. With the provision of the chainless container transport device of the present invention, it is possible to prevent the generation of the displacement of the container holder stopping position attributed to the elongation of the chain and the structure of the chain, whereby the supply of containers, filling of contents, sealing of containers and the like can be performed accurately and efficiently.

With respect to the container holder in the chainless container transport device according to the present invention, provided that the container holder can hold one, two or more, preferably 2 to 10, and more preferably 3 to 8 containers having various shapes and sizes and has a plate like shape, there is no particular limitation. For example, besides the container holder which is provided with recessed portions for mounting the containers and the container holder which has container holding openings which allow the insertion of the containers and supports container flange portions with container holding opening peripheral portions thereof, the container holder which has semicircular or triangular notches on both outer sides or one outer side thereof in the transport direction so as to hold one container using two neighboring container holders and the like are exemplified. Lengths and thicknesses of the container holder in the transport direction as well as in the direction perpendicular to the transport direction (hereinafter referred to as the widthwise direction) may be suitably selected depending on the shape, the size and processing ability of the container, as a specific example, a rectilinear plate like member usually having a length in the transport direction of 50 to 150mm, a length in the widthwise direction of 500 to 1000mm and a thickness of 5 to 10mm in a state that the container holder is supported on the holder support member can be named. Further, although a material of the container holder is not particularly limited, a wear-resistant material which exhibits a small slide friction coefficient with the above-mentioned holder support member is preferable and hard plastic, a stainless steel alloy, an aluminum alloy are named as specific examples.

Further, to decrease the slide friction coefficient between the holder support member and the container holder, it may be possible to provide rollers at portions of the container holder which comes into contact with the holder support member. Further, by providing the container holder which has one, two or more contact portions which partially come into contact with the neighboring container holder, preferably reinforced contact portions having a wall thickness of 2 to 5mm of the container holder in the vicinities of both end portions in the widthwise direction, it is possible to reduce the contact portions of the neighboring container holders. Accordingly, it is possible to smoothly feed and transport a plurality of container holders which are supported on the holder feeding means and the holder support members and, at the same time, it is possible to prevent the wear of both side surfaces in the transport direction of the container holders which are caused by the close contact or the contact of the neighboring container holders. Further, stepped portions which are formed between the reinforcing contact portion and the container holder bodies can be utilized as position restricting guides as described later. Further, particularly, when the reinforcing contact portions are replaceably mounted on the container holder body and the reinforcing contact portions form contact surfaces which come into contact with the holder support members, by merely exchanging reinforcing contact portions which are worn out due to use thereof for a long period, it is possible to use the container holder body semi-permanently and, at the same time, as a material of the container holder body, it is no longer necessary to use a wear-resistant material and it is possible to use an inexpensive material which can be easily formed. Further; by providing the container holder which has one, two or more recessed portions or openings, preferably recessed portions or openings formed in the vicinities of both end portions in the widthwise direction, and more preferably recessed portions or openings formed in the above-mentioned two reinforcing contact portions, which are engaged with the holder engaging and pushing members having projecting portions of the holder feeding means described later, it is possible to easily and surely feed the container holder. To the contrary, it may be possible to provide the container holder which has one, two or more projecting portions, preferably projecting portions formed in the vicinities of both end portions in the widthwise direction, and more preferably projecting portions formed in the above-mentioned two reinforcing contact portions, which are engaged with the holder engaging and pushing members having recessed portions of the holder feeding means. With respect to other modes of the container holder, the container holder having a projecting portion which is engaged with sprocket-wheel type holder feeding means described later formed on a lower surface thereof, the container holder having projecting portions which are engaged with transfer means adopting a sprocket wheel method described later formed on the lower surface in addition to the recessed portions or openings formed in both ends in the widthwise direction, or the container holder having a thread engaging portion which is engaged with screw members of the screw type holder feeding means described later formed on both side surfaces thereof in the widthwise direction can be named.

The above holder support member is not particularly limited provided that the holder support member is a support member which supports a plurality of container holders in a state that the containers are movable along the transport direction and extend in the transport direction. As a specific example, the holder support member which is constituted of one, two or more guide rails and can slidably support the container holders on an upper surface thereof (hereinafter referred to as "holder lower-surface slide support rail member) may be named. Here, the holder support member may preferably be constituted of two holder lower-surface slide support rail members which are arranged in parallel and are formed of rods having a rectangular, circular or elliptical cross section. The holder support member may also preferably be constituted of two guide rails which are arranged in parallel and have an L-shaped, U-shaped or laterally-U-shaped cross section such that the guide rails can slidably support both end portions of the container holder in the widthwise direction (hereinafter referred to as "holder both-ends slide support rail member"). The holder support member may also preferably be constituted of one, two or more magnetic guide rails which can slidably support stainless steel alloy made container holders on a lower surface thereof. Here, the holder support member may preferably be constituted of two rod-like magnetic guide rails made of an electric magnet and having a rectangular cross section. Among these holder support members, in view of a space required for arrangement, ease of arrangement, ease of maintenance and the like, it is preferable to adopt the holder lower-surface slides support rail members. In using the holder lower-surface slides support rail members, it is possible to provide position restricting guides in the widthwise direction on both outer sides of the container holder in the widthwise direction. Here, by using the above-mentioned container holder having the reinforcing contact portions as the container holder and by making use of the above-mentioned stepped portions formed between the reinforcing contact portions and the container holder body as the position restricting guides for two or more guide rails, it is possible to easily impose the positional restriction in the widthwise direction. Further, when the container holder having the reinforcing contact portions is used, by adopting the widthwise recesses formed in the reinforcing portion as guide rails provided in the transfer direction, it is possible to perform the positional restriction in the widthwise direction.

Further, by providing a plurality of rollers for reducing the slide frictional coefficient to the contact portion (the contact surface) between the above-mentioned holder lower-surface slide support rails, the holder both-ends slide support rail member and the container holder, it is possible to perform the feeding and the transfer of the container holder smoothly. Further, the holder lower-surface slide support rail members may be formed into a hollow tubular shape and the holder engaging and pushing members having the projecting portions or the holder engaging and pushing members having the recessed portions of the holder feeding means described later may be disposed inside the tube. Still further, the incoming holder support member may be arranged such that the container holders supported by the incoming holder support member are transferred from the start end side to the terminal side by its own weight. The arrangement of the incoming holder support member below the outgoing holder support member ease the arrangement of respective treatment stations such as the supply of containers, the filling of contents, sealing of containers with lids and the like which are arranged above the outgoing holder support member.

A length of each holder support member can be suitably selected. However, it is preferable that the length of the outgoing holder support member and the length of the incoming holder support member are set to lengths which allow them to support the container holders between the upstream end in the transport direction (start end) and the downstream end in the transport direction (terminal) or between the first transfer means and the second transfer means. Further, although the material of the holder support members is not particularly limited, it is preferable to use a wear-resistant material which exhibits a small slide friction coefficient between the container holder and the holder support member. As such a material, hard plastic, stainless steel alloy, hard plastic covered stainless steel can be specifically named. Among these materials, it is preferable to use the material obtained by covering the stainless steel material with high-density polyethylene (HDPE), for example.

With respect to the holder feeding means, provided that the holder feeding means can intermittently and/or continuously feed and transport a plurality of container holders supported on the holder support members while allowing the circulation of respective container holders in order of the outgoing holder support member, the first transfer means, the incoming holder support member, the second transfer means, the outgoing holder support member, ... , the manner of operation, the mechanism, the mounting position and the like of the holder feeding means are not particularly limited. As one preferable example of the holder feeding means, the holder feeding means which is configured to be able to intermittently feed and transport the respective container holders supported on the outgoing holder support member to the terminal side in the transport direction at a given pitch can be named. As another preferable example of the holder feeding means, the holder feeding means which is configured to be arranged at either one of the start end side of the outgoing holder support member and the start end side of the incoming holder support member or are arranged at both start end sides of the outgoing holder support member and the incoming holder support member, can feed at least the container holder positioned at the start end to the terminal side in the transport direction and, using the fed container holder, can sequentially transport at least a plurality of container holders which are positioned close to each other from the container holder positioned at the start end to the container holder positioned at the terminal side can be named. As still another preferable example of the holder feeding means, the holder feeding means which can simultaneously feed all container holders supported on the holder support members to the terminal sides in the transport direction can be named.

As the above-mentioned holder feeding means, to be more specific, it is possible to name the holder feeding means of a type which can intermittently transport the container holders which are brought into contact with each other, wherein the holder feeding means is constituted of a holder pushing member which is advanced and retracted with a given stroke so as to push the container holder positioned at the start end of the holder support member in a non-engaged state. The holder pushing member may be constituted of two or more rod-like members having a circular or rectangular cross section which are advanced and retracted synchronously, for example, above, below or on both sides of the container holders on the holder support means. Further, a fluid actuated cylinder such as a pneumatic cylinder, a serve motor and the like can be used for reciprocation of the holder pushing member in the transport direction. As the above-mentioned given stroke, assuming a length of the container holder in the transport direction as 1 pitch, it is possible to use 1, 2 or 3 pitches. It is more preferable to use 1 or 2 pitches. With the use of such holder feeding means, even when the container holder has neither recessed portions nor openings, the holder feeding means can feed the container holder positioned at the start end to the terminal side in the transport direction and, at the same time, can intermittently and sequentially feed and transport a plurality of container holders which are positioned in a state that the containers are brought into contact with each other to the terminal side in the transport direction at a given pitch by the fed container holder.

Further, as the above-mentioned holder feeding means, holder feeding means which has a holder engaging and pushing member which is reciprocable with a given stroke so as to feed one, two or more container holders positioned at the start end side of the holder support member in a state that the holder engaging and pushing member is engaged with the container holders. The holder engaging and pushing member and the container holder are engaged with each other due to recessed portions or openings formed in the container holder and engaging and pushing projecting portions formed on the holder engaging and pushing member corresponding to the recessed portions or the openings or, alternatively, due to projecting portions formed on the container holder and recessed portions or openings formed in the holder engaging and pushing member corresponding to the projecting portions. Accordingly, for example, by reciprocating the holder engaging and pushing member having the engaging and pushing projecting portion which is engaged with the recessed portion or the opening formed in the container holder and can feed the container holder with a given stroke, it is possible to feed the container holder engaged with the engaging and pushing projecting portion to the terminal side. Due to this holder feeding means of the type which advances or retracts the holder engaging and pushing projection with the given stroke, the container holder positioned at the start end can be fed to the terminal side in the transport direction and, at the same time, a plurality of container holders which are positioned close to each other can be sequentially and intermittently fed and transported to the terminal side in the transport direction at a given pitch by the fed container holder and, thereafter, the filling operation or the like is performed at the time of stopping. Further, it is also possible to provide the engaging and pushing projecting portions corresponding to the recessed portions or the openings of all container holders on the holder support member to the holder engaging and pushing member which is extended over a substantially full-length of the holder support member in the transport direction. In this case, it is possible to simultaneously feed and transport all container holders on the holder support member to the terminal side in the transport direction intermittently at a given pitch without bringing the container holders into close contact with each other.

Further, in view of the fact that although it is necessary to sequentially transport the container holders at a given pitch on the outgoing holder support member, it is not always necessary to transport the container holders at a given pitch on the incoming holder support member. The incoming holder support member may be constituted as an incoming holder support member which transports the container holder which is positioned at the start end side of the incoming holder support member to the vicinity of the terminal side of incoming holder support member at a stroke. In this case, the use of the container holder between start end side and the terminal side of the incoming holder support member can be omitted and hence, it is economical. In this holder-omission type transport method, by providing the engaging and pushing projecting portion which corresponds to the recessed portion or the opening formed in the container holder which is positioned at the start end side of the incoming holder support member by the holder engaging and pushing member which extends in the transport direction slightly shorter than the full length of the incoming holder support member, it is possible to advance the holder engaging and pushing member to the vicinity of the terminal side at a stroke so as to transport the container holders to the vicinity of the terminal side.

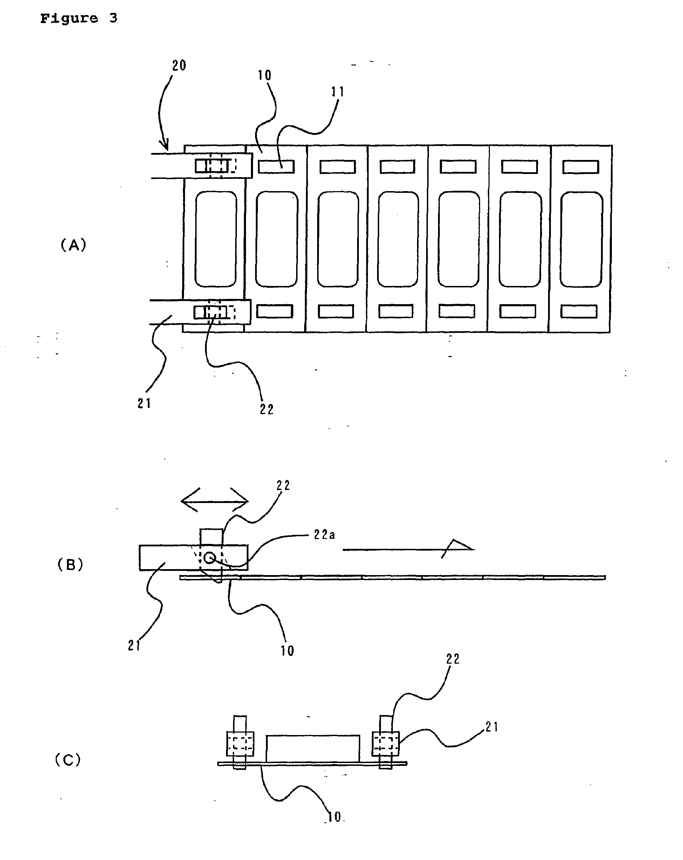

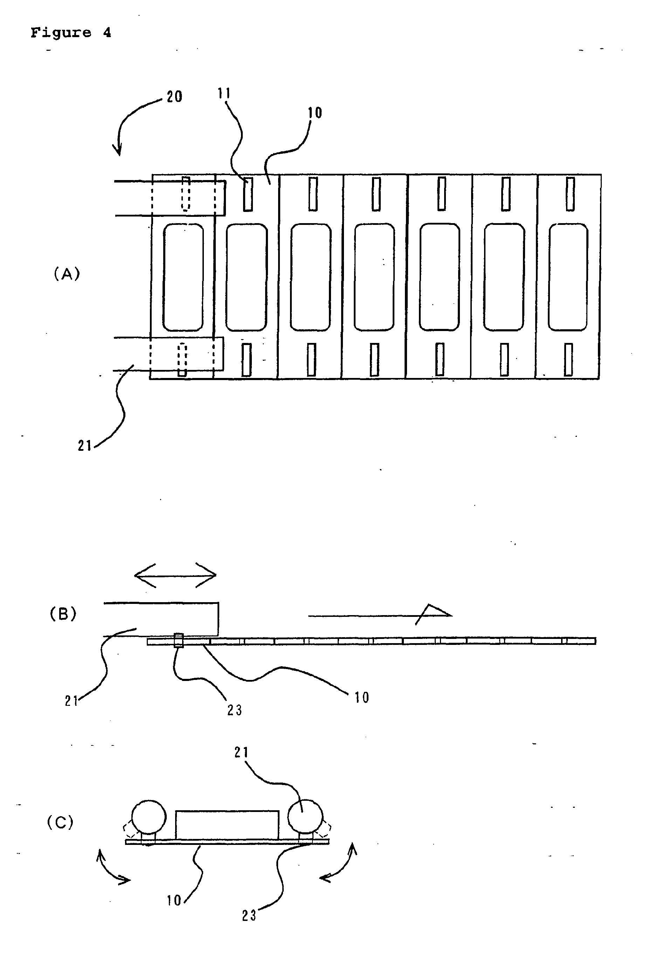

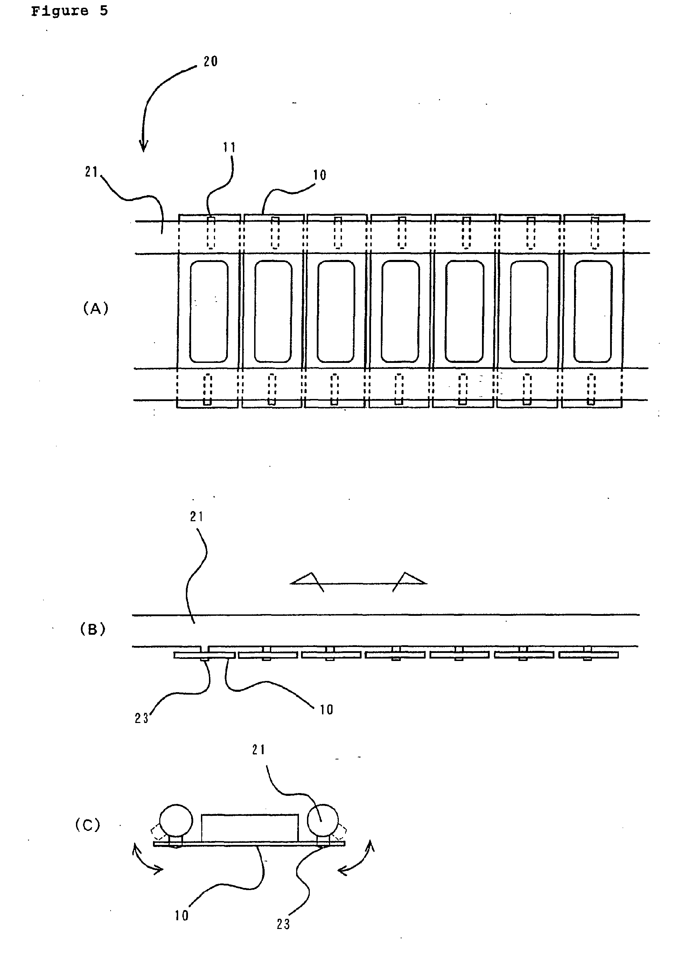

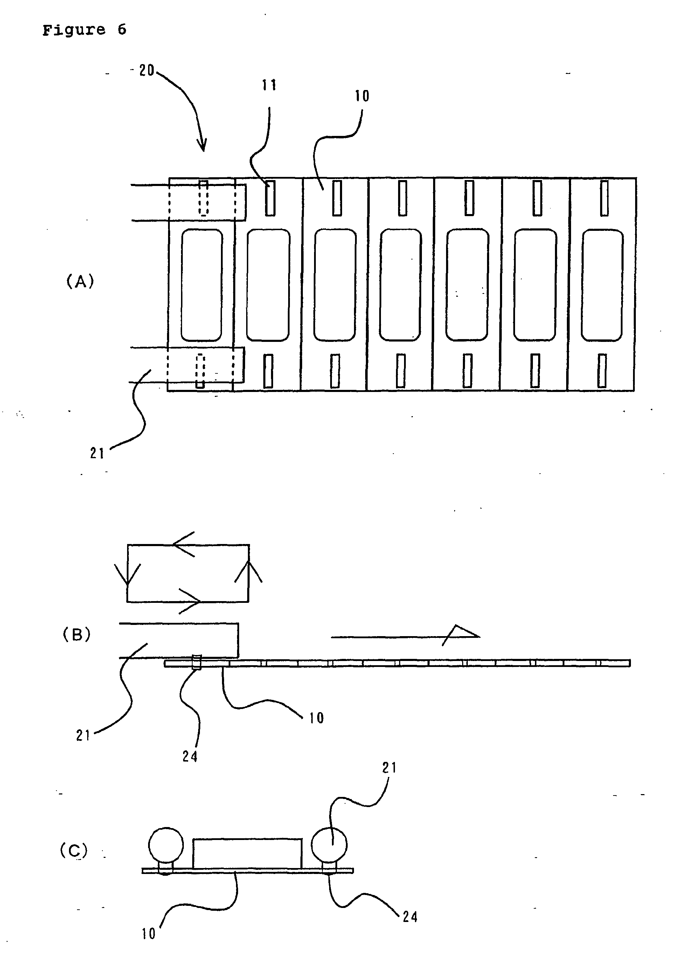

As a specific mode of the holder feeding means of the type which feeds and transports the container holders to the terminal side in the transport direction intermittently at a given pitch in a state that the enraging and pushing projecting portions formed on the holder engaging and pushing member are engaged with the recessed portions or the openings formed in the container holder, a ratchet pawl method (see Fig. 3), a rotary pawl method (see Fig. 4 and Fig. 5), and a box motion pawl method (see Fig. 6) are specifically named.

In the ratchet pawl method, when the holder engaging and pushing member is advanced by a given stroke in a state that the recessed portions or the openings formed in the container holder are engaged with the engaging and pushing projecting portions of the ratchet pawls or the like so as to feed the container holder by a given pitch and, thereafter, the holder engaging and pushing member starts retracting thereof with a given stroke so as to release the engagement of the engaging and pushing projecting portions such as ratchet pawls or the like formed on the holder engaging and pushing member and the recessed portions or the openings formed in the container holder and hence, the container holder is advanced by the given pitch. By repeating this simple reciprocating motion, the container holder is fed.

In the rotary pawl method, the holder engaging and pushing member is advanced by a given stroke in a state that the recessed portions and the openings formed in the container holder are engaged with the engaging and pushing projecting portions so as to feed the container holder by a given pitch and, thereafter, the holder engaging and pushing member is rotated in the longitudinal axis direction to bring the recessed portions and the openings the engaging and pushing projecting portions in a non-engagement state. Then, the holder engaging and pushing member is retracted by a given stroke in a non-engaged state and, thereafter, the holder engaging and pushing member is rotated in the reverse direction so as to bring the recessed portions and the openings and the engaging and pushing projecting portions in the engagement state again. By repeating this reciprocation and normal/reverse rotational motion, the container holder is fed.

In the box motion pawl method, the holder engaging and pushing member is advanced by a given stoke in a state that the recessed portions and the opening formed in the container holder are engaged with the engaging and pushing projecting portions so as to feed the container holder by a given pitch and, thereafter, the holder engaging and pushing member is elevated to bring the recessed portions and the openings and the engaging and pushing projecting portions in a non-engagement state. Then, the holder engaging and pushing member is retracted by a given stroke in this non-engagement state and, thereafter, the holder engaging and pushing member is lowered so as to bring the recessed portions and the openings and the engaging and pushing projecting portions in the engagement state again. By repeating this box motion, the container holder is fed.

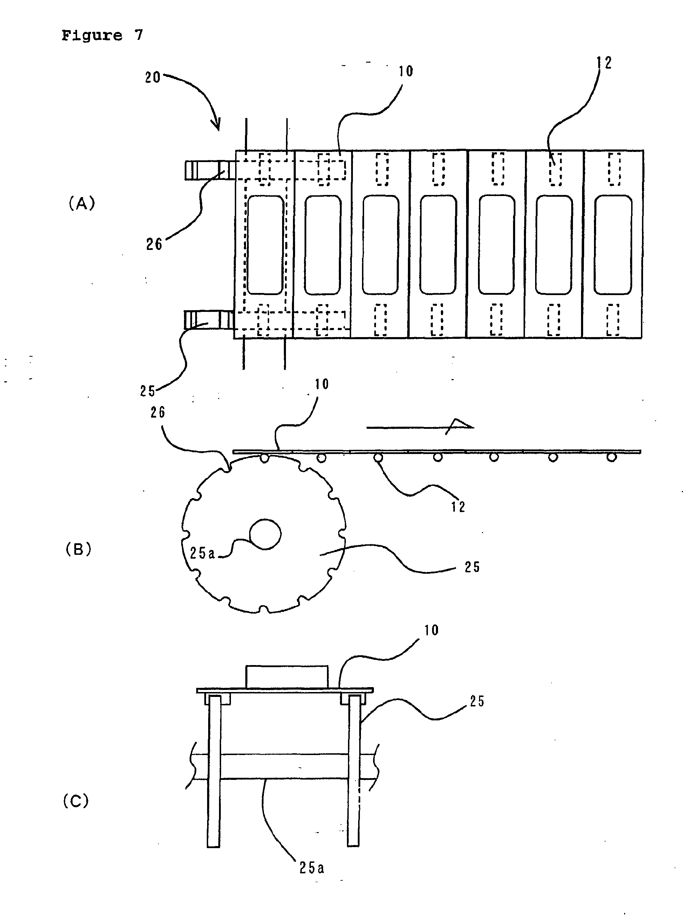

Further, as the holder feeding means adopting another mode, holder feeding means adopting a sprocket wheel method can be named (see Fig. 7). The holder feeding means adopting the sprocket wheel method includes a pair of discs or columnar bodies having recessed portions or projecting portions on outer peripheral surfaces and drive shafts, wherein the drive shafts are rotated in a state that the recessed portions or the projecting portions are meshed with corresponding projecting portions or recessed portions formed on a lower surface of the container holder thus feeding the container holder. According to the holder feeding means adopting this sprocket wheel method, the container holder positioned at the start end of the holder support member is fed to the terminal side in the transport direction and, thereafter, a plurality of container holders which are positioned close to each other are sequentially fed and transported to the terminal side in the transport direction by the above-mentioned fed container holder, while due to the continuous rotation of the pair of discs or the drive shafts of the columnar bodies, the container holders are continuously fed and transported and, at the same time, due to the intermittent rotation of the pair of discs or the drive shafts of the columnar bodies, the container holders can be intermittently fed and transported at a given pitch. Here, besides the above-mentioned pair of discs or the cylindrical bodies and the drive shafts which are provided at the start end side of the holder support member, to realize the more stable transfer of the container holders, it may be possible to provide the combination of the pair of discs or the columnar bodies and the drive shafts, and the pair of discs or the columnar bodies and driven shafts. Further, the pair of discs or the cylindrical bodies and the drive shafts which are provided at the start end side and the terminal side of the holder support member may also function as first and/or second transfer means described later.

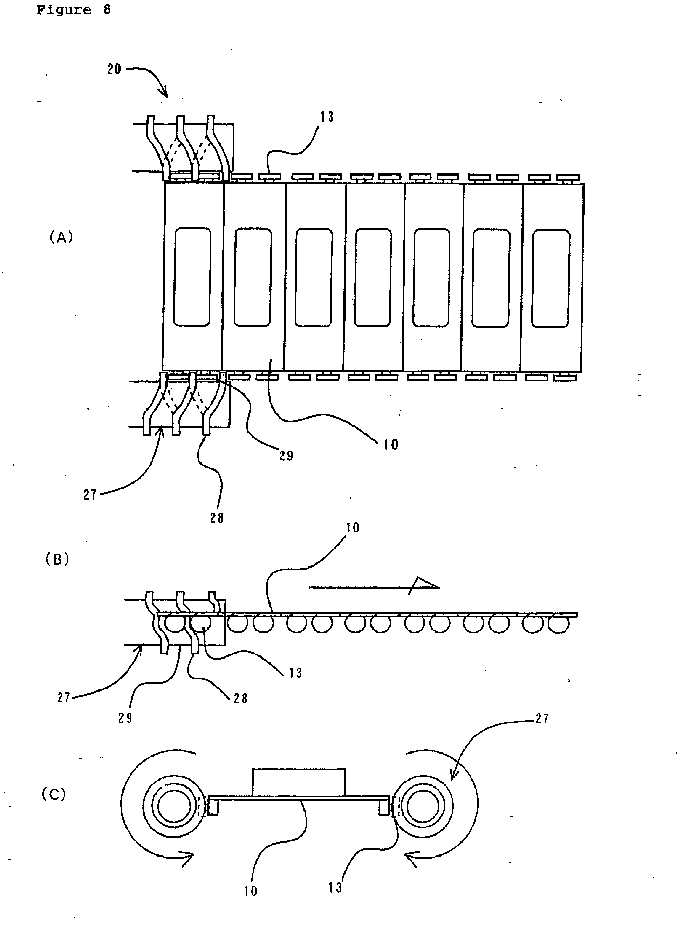

Further, as the holder feeding means adopting another mode, the holder feeding means adopting a screw method can be named (see Fig. 8). The holder feeding means adopting the screw method includes rotatable screw members which form crest of threads on outer peripheral surfaces thereof, wherein grooves of the threads which are formed between the crests of the threads are engaged with thread engaging portions formed on both side surfaces of the container holder and the container holder is fed due to the rotation of the screw members. According to the holder feeding means adopting the screw method, the container holder which is positioned at the start end of the holder support member is fed toward the terminal side in the transport direction and, thereafter, using this fed container holder, a plurality of container holders which are positioned close to each other are sequentially fed and transported toward the terminal side in the transport direction. Here, by continuously rotating the screw members, it is possible to continuously feed and transport the container holders, while by intermittently rotating the screw members, it is possible to intermittently feed and transport the container holders at a given pitch. By providing the screw members along the full length of the holder support member in the transport direction, all container holders on the holder support member can be simultaneously fed and transported continuously or intermittently.

Regarding the first transfer means and/or the second transfer means in the chainless container transport device according to the present invention, the transfer means adopts a "sprocket wheel method", wherein the transfer means includes a pair of discs or columnar bodies which form recessed portions or projecting portions on outer peripheral surfaces thereof and these recessed portions or, the projecting portions are configured to correspond to projecting portions or recessed portions formed on the container holder, wherein it is possible to guide and transfer the meshed container holder onto the pair of discs or the columnar bodies due to the rotation of a rotary shaft for U-turn. Since the pair of discs or the columnar bodies are rotated in a state that the recessed portions or the projecting portions are meshed with the projecting portions or recessed portions formed on the container holders, the container holders are transported and transferred. Here, to prevent the container holder from falling at the time of transfer, it may be possible to provide guide means which guides the container holders to the first transfer means and/or the second transfer means. As guide means, guide members which support the container holders from outside (front surface side), electromagnets which are mounted on the pair of discs, the columnar body or the container holders are named. The transfer means adopting this sprocket wheel method may correspond to either one of holder feeding means which continuously feed the container holders and the holder feeding means which feeds the container holder intermittently. With the use of the transfer means adopting the sprocket wheel method, it is possible to transfer the container holders without using a drive source. However, it is more preferable to use a drive source from a viewpoint that a smoother transfer can be realized and the transfer means can be also used as the holder feeding means.

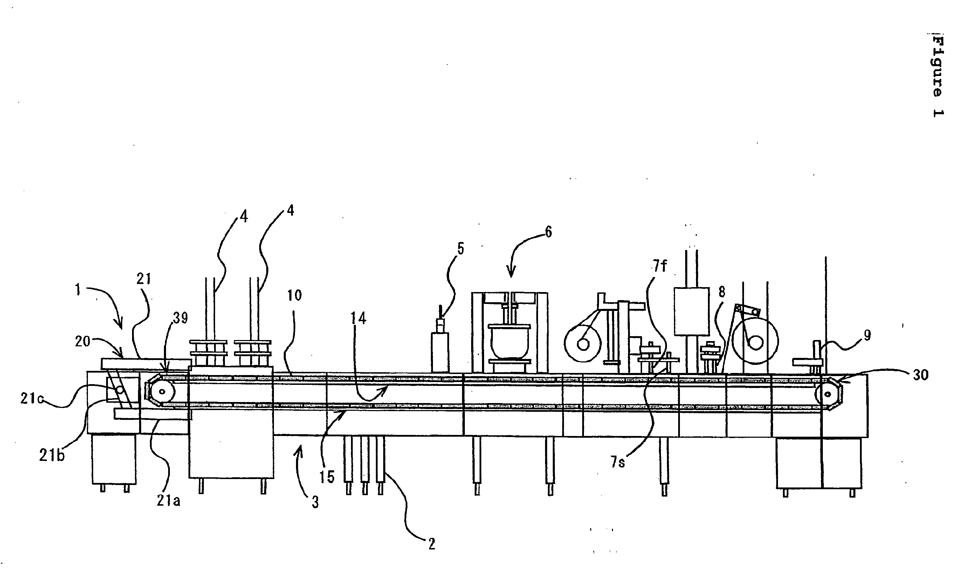

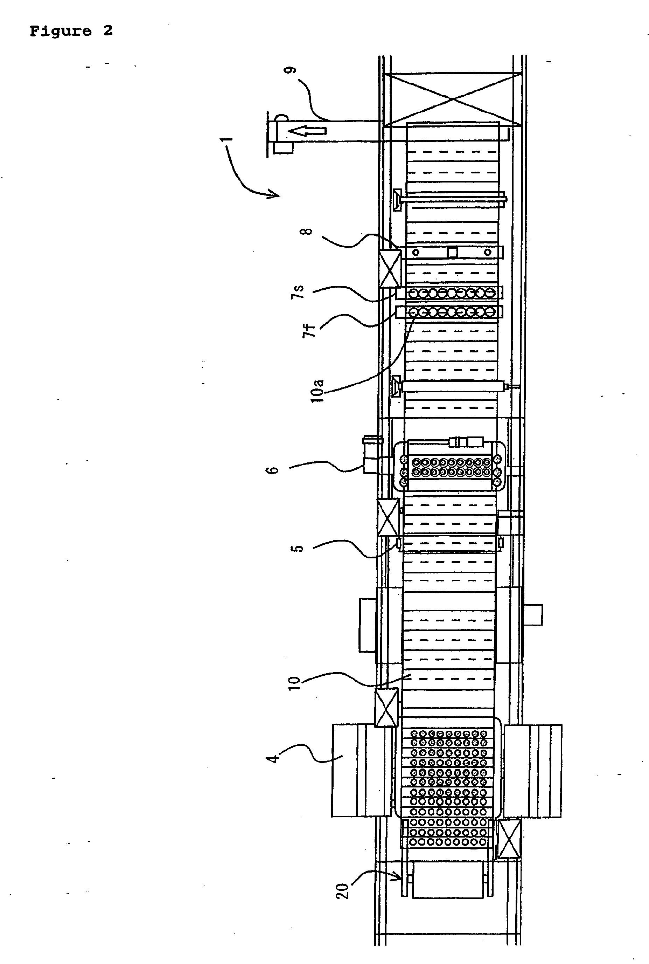

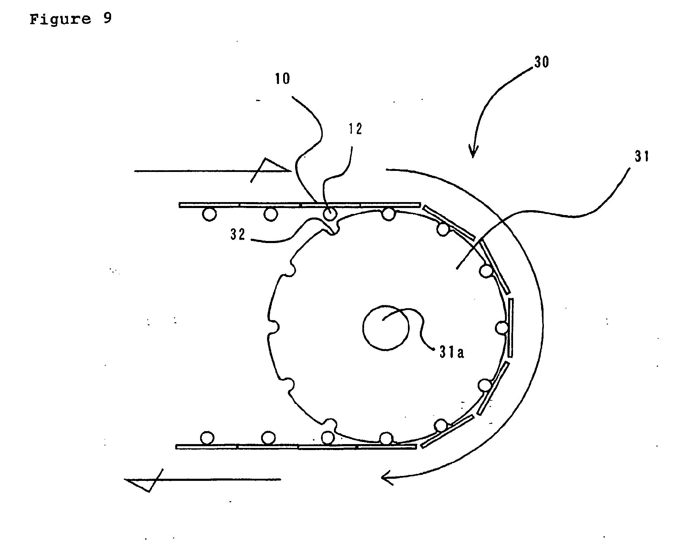

The chainless container transport device of the present invention is explained in detail in conjunction with attached drawings hereinafter. Fig. 1 is a schematic side view of a filling and packaging device provided with a chainless container transport device according to one embodiment of the present invention. Fig. 2 is a schematic plan view of the filling and packaging device shown in Fig. 1. Fig. 3A to Fig. 8C are schematic explanatory views of holder feeding means in the chainless container transport device of the present invention and Fig. 9 is a schematic side view of first transfer means of the chainless container transport device of the present invention. In Fig. 1 to Fig. 12, numeral 10 indicates container holders, numeral 14 indicates an outgoing holder support member, numeral 15 indicates an incoming holder support member, numeral 20 indicates holder feeding means, and numeral 30 indicates first transfer means.

As shown in Fig. 1 and Fig. 2, the chainless container transport device 1 of the present invention is mounted on a filling and packaging machine which fills contents in containers and seals the containers with lid members. The chainless container transport device 1 includes support struts 2 and a device body portion 3 which is supported by the support struts 2. The device body portion 3 includes a plurality of container holders 10 each of which holds one, two or more containers, an outgoing holder support member 14 which extends in the transport direction for supporting the container holders 10 in a movable state, an incoming holder support member 15, holder feeding means 20 which is engageable with the container holders 10 so as to feed the container holders 10 toward a terminal side in the transport direction, first transfer means 30 which is provided at a downstream end portion of the outgoing holder support member 14 and guides the container holders 10 to the incoming holder support member 15, and second transfer means 39 which is provided at a downstream end portion of the incoming holder support member 15 and guides the container holders 10 to the outgoing holder support member 14. Various processing devices for filling and packaging are arranged at given positions of the chainless container transport device 1. That is, from a start end side (a left side in Fig. 1) of the outgoing holder support member 14, a container supply device 4 which supplies the containers in the container holders 10, a foreign material removing device 5 which removes foreign materials from the inside of the containers, a filling device 6 which fills contents in the inside of the containers, a first sealing device 7f and a second sealing device 7s which seal a lid member to the container in which the contents are filled, a trimming device 8 which cuts the lid member of the sealed container into a given shape, and a container take out device 9 which takes out the container after trimming to the outside of the device.

In Fig. 2, the container holder 10 which has an elongated rectangular shape and includes nine container holding openings 10a is shown (in Fig. 3A to Fig. 8C, a state that one large rectangular container is held in the container holding opening is shown). Further, as the container holder 10, there are provided a container holder which forms openings 11 which are engageable with engaging and pushing projecting portions 22, 23, 24 formed on a holder engaging and pushing member 21 of the holder feeding means 20 in the vicinity of both ends in the widthwise direction (see Fig. 3A to Fig. 6C), a container holder 10 which forms projecting portions 12 which are engageable with the holder feeding means adopting a sprocket wheel method on a lower surface thereof (see Fig. 7A to Fig. 7C), and a container holder 10 which forms thread engage portions 13 which are meshed with screw members 27 of the holder feeding means adopting a screw method on side faces of both ends in the widthwise direction (see Fig. 8A to Fig. 8C). The outgoing holder support member 14 which support these container holders 10 in a movable state includes a support member having a length which covers a range in which the above-mentioned respective processing devices 3 to 9 for filling and packaging are arranged. Further, the incoming holder support member 15 is provided below the outgoing holder support member 14 and substantially parallel to the outgoing holder support member 14. Here, after the containers are removed from the container take out means 9, the transported container holder 10 is transferred to the incoming holder support member 15 by the first transfer means 30. This incoming holder support member 15 also has a length and a width substantially equal to those of the outgoing holder support member 14 and, at the same time, the incoming holder support member 15 has guide means (not shown in the drawing) for transporting the container holders 10 while surely supporting the container holders 10 and preventing the displacement of the container holders 10 in the widthwise direction.

The container holders 10 on the holder support members 14, 15 are fed and transported by the holder feeding means 20. Here, irrespective of the intermittent or continuous feeding and transporting of the container holders 10, when some container holders 10 at a start end side of the holder support member are fed, the container holders 10 are transported in a holder close-contacting method in which the container holders 10 on the holder support member are transported in a closely contact state (see Fig. 3A to Fig. 3C, Fig. 4A to Fig. 4C, Fig. 6A to Fig. 8C). On the other hand, when all container holders 10 on the holder support member are simultaneously fed, it is possible to transport the container holders 10 in a holder separation method in which the container holders 10 on the holder support member are transported in a separated state (see Fig. 5A to Fig. 5C).

The holder feeding means 20 shown in Fig. 1 is provided on the upstream side of the outgoing holder support member 14 (a downstream side of the incoming holder support member 15) and intermittently feeds the container holders 10 positioned at the start end of the outgoing holder support member 14. The holder feeding means 20 includes two holder engaging and pushing members 21 having a square cross section which extend above the container holders 10 in parallel in the transport direction, two holder engaging and pushing members 21a having a square cross section which constitute members for feeding the container holders 10 on the incoming holder support member 15 and extend below the container holders 10 in parallel in the transport direction, connection members 21b which connect the holder engaging and pushing members 21 and holder engaging and pushing members 21a, a drive shaft 21c which is mounted on the connection members 21b, and engaging and pushing projecting portions 22, 23, 24 which are engaged with the openings 11 of the container holder 10 formed in distal end portions of the holder engaging and pushing members 21, 21a. The holder engaging and pushing members 21, 21a are reciprocable by a given stroke (for example, corresponding to a short-side length of the container holder) in the transport direction, wherein the holder engaging and pushing member 21 feeds the container holder 10 which is positioned at the start end on the outgoing holder support member 14 and, at the same time, the holder engaging and pushing member 21a feeds the container holder 10 which is positioned at the terminal on the incoming holder support member 15 into the second transfer means 39. Here, it is possible to provide holder feeding means similar to the holder feeding means 20 to an upstream portion of the incoming holder support member 15(a downstream portion of the outgoing holder support member 14) together with the holder transfer means 20 or in place of the holder transfer means 20.

In Fig. 3A to Fig. 3C, the manner of intermittently feeding and transporting the container holders 10 by the holder feeding means 20 which adopts a ratchet pawl method is shown. Here, the holder feeding means 20 which adopts the ratchet pawl method is arranged at an upstream side of the outgoing holder support member 14 and can intermittently feed the container holder 10 positioned at the start end of the outgoing holder support member 14. As shown in Fig. 3A to Fig. 3C, the holder feeding means 20 includes two holder engaging and pushing members 21 having a circular cross section which extend above the container holders 10 in parallel in the transport direction and ratchet pawls 22 which are formed on distal end portions of the holder engaging and pushing members 21 in a projecting manner and are engageable with rectangular openings 11 which are formed in the container holder 10 and have long sides thereof in the transport direction. According to the holder feeding means 20 adopting the ratchet pawl method, in a state that the openings 11 which are formed in the container holder 10 and the ratchet pawls 22 which are rotatably mounted on the distal end portions of the holder engaging and pushing members 21 by means of shafts 22a in the fore-and-aft direction (the transport direction) are engaged with each other, the holder engaging and pushing members 21 are advanced by a given stroke so as to feed the container holder 10 by a given pitch and, thereafter, the holder engaging and pushing members 21 are retracted by a given stroke, wherein, at the time of retracting, the engagement between the ratchet pawls 22 formed on the holder engaging and pushing members 21 and the openings 11 formed in the container holder 10 is released whereby the container holder 10 is advanced by a given pitch eventually. By repeating the simple reciprocation of the holder engaging and pushing members 21, the container holders 10 can be intermittently fed by the holder close-contact method.

In Fig. 4A to Fig. 4C, the manner of intermittently feeding and transporting the container holders 10 by the holder feeding means 20 which adopts a rotary pawl method is shown. Here, the holder feeding means 20 which adopts the rotary pawl method is arranged at an upstream side of the outgoing holder support member 14 and can intermittently feed the container holder 10 positioned at the start end of the outgoing holder support member 14. As shown in Fig. 4A to Fig. 4C, the holder feeding means 20 includes two holder engaging and pushing members 21 having a circular cross section which extend above the container holders 10 in parallel in the transport direction and rotary pawls 23 which are formed on distal end portions of the holder engaging and pushing members 21 in a projecting manner and are engageable with rectangular openings 11 which are formed in the container holder 10 and have long sides thereof in the widthwise direction. The holder engaging and pushing member 21 is configured to be rotatable about an axis thereof thus capable of bringing the container holder 10 and the rotary pawls 23 into an engagement state and a non-engagement state. According to the holder feeding means 20 adopting the rotary pawl method, in a state that the openings 11 which are formed in the container holder 10 and the rotary pawls 22 are engaged with each other, the holder engaging and pushing members 21 are advanced by a given stroke so as to feed the container holder 10 by a given pitch and, thereafter, the holder engaging and pushing members 21 are rotated about the longitudinal axes thereof so as to bring the openings 11 and the rotary pawls 23 into a non-engagement state. Then, the holder engaging and pushing members 21 are retracted by a given stroke in this non-engagement state and, thereafter, the holder engaging and pushing members 21 are rotated in a reverse direction about the longitudinal axes thereof so as to bring the openings 11 and the rotary pawls 23 into the engagement state again. By repeating the above-mentioned reciprocation and normal/reverse rotation motion of the holder engaging and pushing member 21, the container holders 10 can be intermittently fed by the holder close-contact method.

Further, Fig. 5A to Fig. 5C show another mode of the above-mentioned holder feeding means 20 adopting the rotary pawl method. As shown in Fig. 5A to Fig. 5C, the holder feeding means 20 includes, to enable the intermittent feeding of all container holders 10 on the outgoing holder support member 14 simultaneously, two holder engaging and pushing members 21 having a circular cross section which extend above the container holders 10 in the transport direction in parallel over a full length of the outgoing holder support member 14, and a plurality of rotary pawls 23 which are formed on the holder engaging and pushing members 21 in a projecting manner and at a given interval and are respectively engageable with respective rectangular openings 11 which are formed in the container holders 10 and have long sides in the widthwise direction. The holder engaging and pushing members 21 are rotatable about axes thereof so as to bring the container holders 10 and the rotary pawls 23 into an engagement state and a non-engagement state. According to the holder feeding means 20 adopting the rotary pawl method, in a state that the respective openings 11 which are formed in the container holders 10 and the plurality of corresponding rotary pawls 23 are engaged with each other, the holder engaging and pushing members 21 are advanced by a given stroke so as to feed all container holders 10 by a given pitch simultaneously and, thereafter, the holder engaging and pushing members 21 are rotated about the longitudinal axes thereof so as to bring the openings 11 and the rotary pawls 23 into a non-engagement state. Then, the holder engaging and pushing members 21 are retracted by a given stroke in this non-engagement state and, thereafter, the holder engaging and pushing members 21 are rotated in a reverse direction about the longitudinal axes thereof so as to bring the openings 11 and the rotary pawls 23 into the engagement state again. By repeating the above-mentioned reciprocation and normal/reverse rotation motion of the holder engaging and pushing member 21, all container holders 10 can be intermittently fed by the holder separation method.

In Fig. 6A to Fig. 6C, the holder feeding means 20 which adopts a box motion pawl method is shown. Here, the holder feeding means 20 which adopts the box motion pawl method is arranged at an upstream side of the outgoing holder support member 14 and can intermittently feed the container holder 10 positioned at the start end of the outgoing holder support member 14. As shown in Fig. 6A to Fig. 6C, the holder feeding means 20 includes two holder engaging and pushing members 21 having a circular cross section which extend above the container holders 10 in parallel in the transport direction and box motion pawls 24 which are formed on distal end portions of the holder engaging and pushing members 21 in a projecting manner and are engageable with rectangular openings 11 which are formed in the container holder 10 and have long sides thereof in the widthwise direction. According to the holder feeding means 20 adopting the box motion pawl method, in a state that the openings 11 which are formed in the container holder 10 and the box motion pawls 24 are engaged with each other, the holder engaging and pushing members 21 are advanced by a given stroke so as to feed the container holder 10 by a given pitch and, thereafter, the holder engaging and pushing members 21 are elevated so as to bring the openings 11 and the box motion pawls 24 into a non-engagement state. Then, the holder engaging and pushing members 21 are retracted by a given stroke in this non-engagement state and, thereafter, the holder engaging and pushing members 21 are lowered so as to bring the openings 11 and the box motion pawls 24 into the engagement state again. By repeating such a box motion, the container holders 10 can be intermittently fed by the holder close-contact method.

In Fig. 7A to Fig. 7C, the manner of feeding and transporting the container holders 10 by the holder feeding means 20 which adopts a sprocket wheel method is shown. Here, the holder feeding means 20 which adopts the sprocket wheel method is arranged at an upstream of the outgoing holder support member 14 and can continuously or intermittently feed the container holder 10 positioned at the start end of the outgoing holder support member 14. As shown in Fig. 7A to Fig. 7C, the holder feeding means 20 includes a pair of discs which is pivotally arranged in parallel at both ends of the container holder 10 in the widthwise direction and includes recessed portions 26 which are engageable with a projecting portion 12 formed on the container holder 10 on outer peripheral surfaces thereof and a drive shaft 25a. According to the holder feeding means 20 adopting the sprocket wheel method, the container holder 10 which is positioned at the start end of the outgoing holder support member 14 can be fed toward the terminal side of the outgoing holder support member 14 in the transport direction and, thereafter, using the fed container holder 10, a plurality of container holders 10 which are arranged close to each other can be sequentially fed and transported toward terminal side of the outgoing holder support member 14 in the transport direction. Here, by continuously rotating the drive shaft 25a of the pair of discs 25, it is possible to continuously feed and transport the container holders 10 by the holder close-contact method, while by intermittently rotating the drive shaft 25a of the pair of discs 25, it is possible to intermittently feed and transport the container holders 10 by the holder close-contact method at a given pitch. Here, this holder feeding means adopting the sprocket wheel method can be also used as the first and/or second transfer means.

In Fig. 8A to Fig. 8C, the manner of feeding and transporting the container holders 10 by the holder feeding means 20 which adopts a screw method is shown. Here, the holder feeding means 20 which adopts the screw method is arranged at an upstream of the outgoing holder support member 14 and can continuously or intermittently feed the container holder 10 positioned at the start end of the outgoing holder support member 14. As shown in Fig. 8A to Fig. 8C, the holder feeding means 20 includes screw members 27 which are arranged at both sides of the container holder 10 in the widthwise direction and form crests of threads 28 on outer peripheral surfaces thereof. The screw members 27 are rotatable about axes thereof while being secured so as not to move in the transport direction and grooves of threads 29 formed between the crests of threads 28 are engaged with screw engaging portions 13 provided to both-end side portions of the container holder 10. According to the holder feeding means 20 adopting the screw method, the container holder 10 which is positioned at the start end of the outgoing holder support member 14 can be fed toward the terminal side of the outgoing holder support member 14 in the transport direction and, thereafter, using the fed container holder 10, a plurality of container holders 10 which are arranged close to each other can be sequentially fed and transported toward terminal side of the outgoing holder support member 14 in the transport direction by the holder close-contact method. Here, by continuously rotating the screw members 27, it is possible to continuously feed and transport the container holders 10, while by intermittently rotating the screw members 27, it is possible to intermittently feed and transport the container holders 10 at a given pitch.

In Fig. 9, the manner of guiding and transferring the container holders 10 by the first transfer means 30 which adopts a sprocket wheel method is shown. Here, the first transfer means 30 which adopts the sprocket wheel method is arranged at a downstream of the outgoing holder support member 14 and can continuously or intermittently transfer the container holder 10 positioned at the terminal of the outgoing holder support member 14 to the incoming holder support member 15. The first transfer means 30 which adopts the sprocket wheel method includes a pair of discs 31 which are pivotally arranged in parallel at both ends of the container holder 10 in the widthwise direction and include recessed portions 32 which are engageable with a projecting portion 12 formed on the container holder 10 on the outer peripheral surfaces thereof and a U-turn rotary shaft 31a. Due to the rotation of the pair of discs 31 supported on the U-turn rotary shaft 31a which works either a driven shaft or a drive shaft in synchronism with the feeding operation of the holder feeding means 20, it is possible to transfer the container holders 10 from the outgoing holder support member 14 to the incoming holder support member 15. Further, the first transfer means 30 may have guide members which are provided in a spaced-apart manner at a given interval in the widthwise direction of the container holders 10 and support the container holders 10 from outside. Due to such guide members, it is possible to prevent the container holders 10 from falling from the first transfer means 30. Further, the second transfer means 39 shown in Fig. 1 has the substantially same constitution as the first transfer means 30.

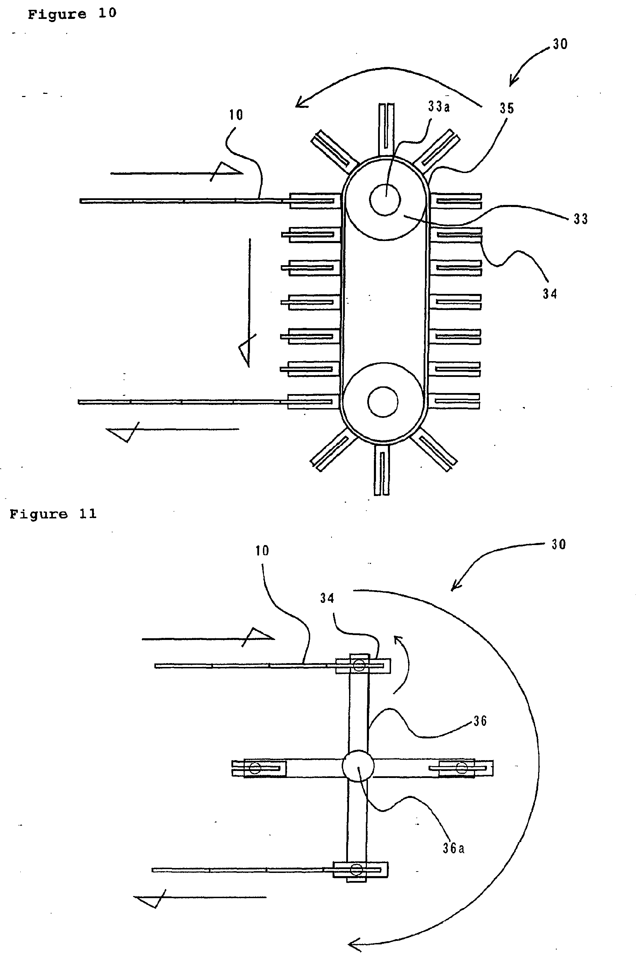

Fig. 10 to Fig. 12 show other manners of guiding and transferring container holders, which are not part of the present invention.

In Fig. 10, the manner of guiding and transferring container holders adopts a rotary elevator method. Here, the first transfer means 30 which adopts the rotary elevator method is arranged at a downstream of the outgoing holder support member 14. The first transfer means 30 which adopts rotary elevator method includes two pulleys 33 having elevator rotary shafts 33a which are arranged vertically in a spaced-apart manner with a given distance (a vertical distance between the incoming holder support member and the outgoing holder support member) and an endless belt 35 which is wound around two pulleys 33 and forms a plurality of holder accommodating portions 34 having a U-shaped verticals cross section and capable of holding the container holders 10 on an outside thereof. According to the first transfer means 30 which adopts rotary elevator method, the timing of the operation is determined such that among the container holders 10 which are intermittently fed onto the outgoing holder support member 14 by the holder feeding means 20, the container holder 10 disposed at the terminal of the outgoing holder support member 14 is accommodated in the holder accommodating portion 34. Then, when the feeding of the container holder 10 by the holder feeding means 20 is stopped, two pulleys 33 are intermittently rotated as a given speed in the counterclockwise direction so as to lower the holder accommodating portion 34 in which the container holder 10 is accommodated by a given distance and, at the time of stopping the lowering of the holder accommodating portion 34, the feeding of the container holder 10 by the holder feeding means 20 is performed. The holder accommodating portion 34 in which the container holder 10 is accommodated is intermittently lowered six times and, during a period in which the lowering of the holder accommodating portion 34 is stopped and the holder accommodating portion 34 becomes coplanar with the incoming holder support member 15, the container holder 10 which is accommodated in the holder accommodating portion 34, using the holder feeding means 20, pushes the container holder 10 disposed at the start end of the incoming holder support member 15 by one pitch and, at the same time, is fed to the incoming holder support member 15.

In Fig. 11, the manner of guiding and transferring container holders adopts a Ferris wheel method. Here, the first transfer means 30 which adopts the Ferris wheel method is arranged at a downstream of the outgoing holder support member 14. The first transfer means 30 which adopts the Ferris method includes a Ferris wheel rotary shaft 36a and rotary bodies 36 which are fixedly mounted on the Ferris wheel rotary shaft 36a at an angular interval of 90° , wherein a holder accommodating portion 34 having a U-shaped vertical cross section is mounted on an end portion of each rotary body 36 such that the container holder 10 can be always held in a horizontal state. According to the first transfer means 30 which adopts the Ferris method, the timing of operation is determined such that the container holder 10 disposed at the terminal of the outgoing holder support member 14 which is intermittently fed by the holder feeding means 20 is accommodated in the holder accommodating portion 34, the Ferris wheel rotary shaft 36a is intermittently rotated in the clockwise direction by 90° during a period in which the feeding of the container holder 10 - by the holder feeding means 20 is stopped, and the feeding of the container holder 10 by .the holder feeding means is performed during a period in which the rotation of the Ferris wheel rotary shaft 36a is stopped. The holder accommodating portion 34 in which the container holder 10 is accommodated is intermittently rotated twice and, thereafter, during the rotation stop period in which the holder accommodating portion 34 becomes coplanar with the incoming holder support member 15, the container holder 10 which is accommodated in the holder accommodating portion 34, using the holder feeding means 20, pushes the container holder 10 disposed at the start end of the incoming holder support member 15 by one pitch and, at the same time, is fed to the incoming holder support member 15.

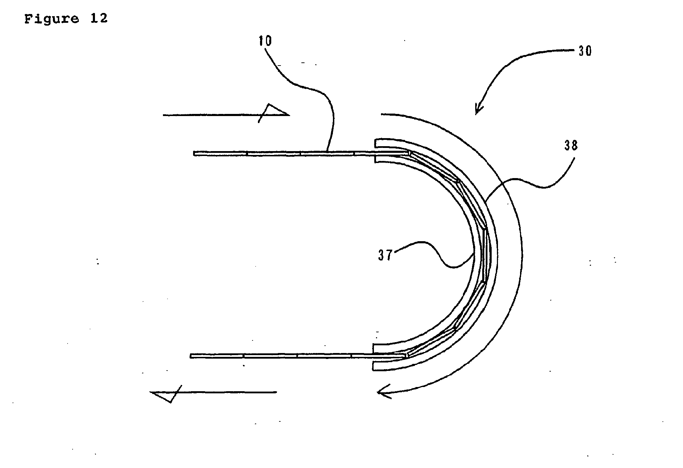

In Fig. 12, the manner of guiding and transferring container holders adopts a semicircular guide rail method. Here, the first transfer means 30 which adopts the semicircular guide rail method is arranged at a downstream of the outgoing holder support member 14. The first transfer means 30 which adopts the semicircular guide rail method includes a semicircular slide guide portion which is constituted of a semicircular inner guide member 37 and a semicircular outer guide member 38. The semicircular slide guide portion includes a holder introducing opening on the same plane as the outgoing holder support member 14, forms a holder discharge opening on the same plane as the incoming holder support member 15, and defines a passage which is capable of slidably guiding the container holder 10. According to the first transfer means 30 which adopts the semicircular guide rail method, among the container holders 10 which are continuously or intermittently fed to the outgoing holder support member 14 by the holder feeding means 20, when the container holder 10 which is disposed at the terminal of the outgoing holder support member 14 is introduced into the semicircular slide guide portion from a holder introduction port thereof, the container holders 10 in the inside of the semicircular slide guide portion are sequentially guided and fed by the inner guide member 37 and the outer guide member 38 and, at the same time, the container holder 10 which is positioned in the vicinity of a holder outlet port of the semicircular slide guide portion is pushed onto the incoming holder support members 15 and, using this pushed container holder 10, the container holder 10 which is disposed at the start end of the incoming holder support member 15 is pushed by one pitch.

## Claims

1. A chainless container transport device (1) comprising:
a plurality of plate-like container holders (10) which hold one, two or more containers;
an outgoing holder support member (14) and an incoming holder support member (15) which are extended in the transport direction to support the plurality of container holders in a state that the container holders are movable along the transport direction;
first transfer means (30) which is provided between a terminal of the outgoing holder support member and a start end of the incoming holder support member and is arranged to sequentially transfer the container holders which are supported and transported by the outgoing holder support member to the incoming holder support member;
second transfer means (39) which is provided between a terminal of the incoming holder support member and a start end of the outgoing holder support member and is arranged to sequentially transfer the container holders which are supported and transported by the incoming holder support member to the outgoing holder support member; and
holder feeding means (20) which feeds and transports the plurality of container holders supported by the outgoing holder support member and/or the incoming holder support member such that the respective container holders can be circulated in order of the outgoing holder support member, the first transfer means, the incoming holder support member, the second transfer means, the outgoing holder support member ;
wherein the incoming holder support member (15) is arranged below the outgoing holder support member (14),
**characterized in that**:
the first transfer means (30) and/or the second transfer means (39) include a pair of discs (31) or a columnar body which has recessed portions or projecting portions on outer peripheral surfaces thereof, the recessed portions (32) or the projecting portions being formed corresponding to the projecting portions (12) or recessed portions formed on the container holders, and the container holders being guided and transferred by the rotation of the pair of discs or the columnar body about a horizontal axis.

2. . A container transport device (1) according to claim 1, wherein the container holders (10) are configured such that one, two or more containers are held by two container holders.

3. . A container transport device (1) according to claim 1 or 2, wherein the container holder (10) has one, two or more contact portions which are partially brought into contact with the neighboring container holder.

4. . A container transport device (1) according to any one of preceding claims 1 to 3, wherein the container holder (10) has one, two or more recessed portions or openings which are engaged with the holder feeding means (20).

5. . A container transport device (1) according to any one of preceding claims 1 to 4, wherein the outgoing holder support member (14) and/or the incoming holder support member (15) are constituted of one, two or more guide rails which slidably support the container holders (10) on upper surfaces thereof.

6. . A container transport device (1) according to any one of preceding claims 1 to 4, wherein the outgoing holder support member (14) and/or the incoming holder support member (15) are constituted of two guide rails which slidably support both end portions of the container holder (10) in the direction perpendicular to the transport direction of the container holder (10).

7. . A container transport device (1) according to any one of preceding claims 1 to 6, wherein the outgoing holder support member (14) and/or the incoming holder support member (15) include rollers for reducing a slide friction coefficient of contact portions thereof with the container holder (10).

8. . A container transport device (1) according to any one of preceding claims 1 to 7, wherein the incoming holder support member (15) is arranged in an inclined manner such that the container holder (10) supported by the incoming holder support member (15) is transported from a start end side to a terminal side due to a dead weight thereof.

9. . A container transport device (1) according to any one of preceding claims 1 to 8, wherein the holder feeding means (20) is configured to be capable of intermittently feeding and transporting the respective container holders (10) supported on the outgoing holder support member (14) toward the terminal side in the transport direction at a given pitch.

10. . A container transport device (1) according to any one of preceding claims 1 to 9, wherein the holder feeding means (20) is or are arranged at the start end sides of the outgoing holder support member (14) and/or the incoming holder support member (15), the container holder positioned at the start end is fed to the terminal side in the transport direction, and the plurality of container holders (10) which are positioned close to each other are sequentially transported to the terminal side in the transport direction by the fed container holder (20).

11. . A container transport device (1) according to any one of preceding claims 1 to 9, wherein the holder feeding means (20) simultaneously feed all container holders (10) supported by the outgoing holder support member (14) and/or the incoming holder support member (15) toward the terminal side in the transport direction.

12. . A container transport device (1) according to any one of preceding claims 1 to 10, wherein the holder feeding means (20) is configured as a holder pushing member (21) which reciprocates at a given stroke so as to push the container holder (10) positioned at a start end or start ends of the outgoing holder support member (15) and/or the incoming holder support member (14) toward a terminal side or terminal sides in a non-engaged state.

13. . A container transport device (1) according to any one of preceding claims 1 to 11, wherein the holder feeding means (20) includes a holder engaging and pushing member (21) which reciprocates at a given stroke so as to feed one, two or more container holders (10) positioned at a start end side or start end sides of the outgoing holder support member (14) and/or the incoming holder support member (15) toward the terminal sides in a state that the holder engaging and pushing member (21) is engaged with the container holder (10).

14. . A container transport device (1) according to claim 13, wherein the holder engaging and pushing member (21) includes an engaging and pushing projecting portion which is capable of feeding the container holder (10) by being engaged with a recessed portion or an opening formed in the container holder (10).

15. . A container transport device (1) according to claim 13 or 14, wherein the holder engaging and pushing member (21) is configured to repeat the reciprocating and normal-and-reverse rotational movement in which the holder engaging and pushing member (21) is advanced by a given stroke in a state that the holder engaging and pushing member (21) is engaged with a recessed portion or an opening formed in the container holder (10) and, thereafter, is rotated to assume a non-engaged state that the holder engaging and pushing member (21) is not engaged with the recessed portion or the opening and, thereafter, is retracted by a given stroke in the non-engaged state, and is rotated in a reverse direction to assume the engaged state thus feeding the container holder (10).

16. . A container transport device (1) according to claim 13 or 14, wherein the holder engaging and pushing member (21) is configured to repeat the box-like movement in which the holder engaging and pushing member (21) is advanced by a given stroke in a state that the holder engaging and pushing member (21) is engaged with a recessed portion or an opening formed in the container holder (10) and, thereafter, is elevated to assume a non-engaged state that the holder engaging and pushing member (21) is not engaged with the recessed portion or the opening and, thereafter, is retracted by a given stroke in the non-engaged state, and is lowered to assume the engaged state thus feeding the container holder (10).

17. . A container transport device (1) according to any one of preceding claims 1 to 8, wherein the holder feeding means (20) is configured to include a pair of discs (31) or a columnar body which has recessed portions or projecting portions on outer peripheral surfaces thereof and a drive shaft, and the recessed portions or the projecting portions are meshed with corresponding projecting portions or recessed portions formed on the container holder (10) and the container holder (10) is fed by the rotation of the drive shafts.

18. . A container transport device (1) according to any one of preceding claims 1 to 8, wherein the holder feeding means (20) is configured to include rotatable screw members (27) which form thread crests on outer peripheral surfaces thereof, and thread valleys formed between the thread crests are engaged with thread engaging portions (13) formed on both outer side surfaces of the container holder (10), and the container holder (10) is fed by rotating the screw members (27).

19. . A container transport device (1) according to any one of preceding claims 1 to 18, wherein the container transport device (1) is configured to be mounted on a filling and packaging machine which fills contents into the container and packages the contents.

## Patentansprüche

1. Kettenlose Behältertransportvorrichtung (1), die aufweist:
eine Mehrzahl von plattenartigen Behälterhaltern (10), die einen, zwei oder mehr Behälter halten,
ein nach außen führendes Halterstützelement (14) und ein nach innen führendes Halterstützelement (15), die sich in Transport- bzw. Förderrichtung erstrecken, um die Mehrzahl von Behälterhaltern in einem Zustand zu halten, in welchem die Behälterhalter entlang der Förderrichtung bewegbar sind,
eine erste Übertragungseinrichtung (30), die zwischen einem abschließenden Ende des nach außen führenden Halterstützelements und einem Anfangsende des nach innen führenden Halterstützelements vorgesehen und so angeordnet ist, daß sie die gehalterten und transportierten Behälterhalter nacheinander von dem nach außen führenden Halterstützelement zu dem nach innen führenden Halterstützelement überführt,
eine zweite Übertragungseinrichtung (39), die zwischen einem abschließenden Ende des nach innen führenden Halterstützelements und einem Anfangsende des nach außen führenden Halterstützelements vorgesehen und so angeordnet ist, daß sie die gehalterten und transportierten Behälterhalter nacheinander von dem nach innen führenden Halterstützelement zu dem nach außen führenden Halterstützelement überführt, und
eine Haltervorschub- bzw. -fördereinrichtung (20), die die Mehrzahl von Behälterhaltem, die von dem nach außen führenden Halterstützelement und/oder dem nach innen führenden Halterstützelement gehaltert bzw. getragen werden, so fördert und transportiert, daß die jeweiligen Behälterhalter in der Reihenfolge von dem nach außen führenden Halterstützelement, der ersten Übertragungseinrichtung, dem nach innen führenden Halterstützelement, der zweiten Übertragungseinrichtung und dem nach außen führenden Halterstützelement im Kreis geführt werden können,
wobei das nach innen führende Halterstützelement (15) unterhalb des nach außen führenden Halterstützelements (14) angeordnet ist,
**dadurch gekennzeichnet, daß**:
die erste Übertragungseinrichtung (30) und/oder die zweite Übertragungseinrichtung (39) ein Paar von Scheiben (31) oder einen säulenförmigen Körper aufweisen, der an äußeren peripheren Flächen desselben vertiefte bzw. ausgesparte Abschnitte oder vorspringende Abschnitte aufweist, wobei die ausgesparten Abschnitte (32) oder die vorspringenden Abschnitte jeweils entsprechend den vorspringenden Abschnitten (12) oder den ausgesparten Abschnitten geformt sind, die auf den Behälterhaltern ausgebildet sind, und die Behälterhalter durch die Drehung des Paares von Scheiben oder des säulenförmigen Körpers um eine horizontale Achse geführt und überführt werden.

2. Behältertransportvorrichtung (1) nach Anspruch 1, wobei die Behälterhalter (10) so ausgelegt sind, daß ein, zwei oder mehr Behälter von zwei Behälterhaltern gehalten werden.

3. Behältertransportvorrichtung (1) nach Anspruch 1 oder 2, wobei der Behälterhalter (10) einen, zwei oder mehrere Kontaktabschnitte aufweist, die teilweise mit dem benachbarten Behälterhalter in Kontakt gebracht werden.

4. Behältertransportvorrichtung (1) nach einem der vorangegangenen Ansprüche 1 bis 3, wobei der Behälterhalter (10) einen, zwei oder mehr ausgesparte Abschnitte oder Öffnungen aufweist, die mit der Behältervorschubeinrichtung (20) in Eingriff sind.

5. Behältertransportvorrichtung (1) nach einem der vorangegangenen Ansprüche 1 bis 4, wobei das nach außen führende Halterstützelement (14) und/oder das nach innen führende Halterstützelement (15) aus einer, zwei oder mehreren Führungsschienen bestehen, die die Behälterhalter (10) gleitend verschiebbar auf oberen Oberflächen derselben haltern bzw. tragen.

6. Behältertransportvorrichtung (1) nach einem der vorangegangenen Ansprüche 1 bis 4, wobei das nach außen führende Halterstützelement (14) und/oder das nach innen führende Halterstützelement (15) aus zwei Führungsschienen bestehen, die beide Endabschnitte des Behälterhalters (10) gleitend verschiebbar in der Richtung senkrecht zur Transport- bzw. Förderrichtung des Behälterhalters (10) tragen.

7. Behältertransportvorrichtung (1) nach einem der vorangegangenen Ansprüche 1 bis 6, wobei das nach außen führende Halterstützelement (14) und/oder das nach innen führende Halterstützelement (15) Rollen aufweisen, um einen Gleitreibungskoeffizienten von Kontaktabschnitten derselben mit dem Behälterhalter (10) zu reduzieren.

8. Behältertransportvorrichtung (1) nach einem der vorangegangenen Ansprüche 1 bis 7, wobei das nach innen führende Halterstützelement (15) geneigt angeordnet ist, so daß der von dem nach innen führenden Halterstützelement (15) gehalterte bzw. getragene Behälterhalter (10) durch sein Eigengewicht von einer Anfangsseite bis zu einer Endseite transportiert wird.

9. Behältertransportvorrichtung (1) nach einem der vorangegangenen Ansprüche 1 bis 8, wobei die Haltervorschubeinrichtung (20) so ausgelegt ist, daß sie die jeweiligen, auf dem nach außen führenden Halterstützelement (14) gehalterten Behälterhalter (10) unter einem gegebenen Neigungswinkel abwechselnd fördern und in Richtung auf die Endseite in der Transportrichtung transportieren kann.

10. Behältertransportvorrichtung (1) nach einem der vorangegangenen Ansprüche 1 bis 9, wobei die Haltervorschubeinrichtung(en) (20) an den Anfangsseiten des nach außen führenden Halterstützelements (14) und/oder des nach innen führenden Halterstützelements (15) angeordnet ist oder sind, der am Anfangsende angeordnete Behälterhalter in Transportrichtung der Endseite zugeführt wird und die Mehrzahl von Behälterhaltern (10), die nahe beieinander angeordnet sind, von dem geförderten Behälterhalter (10) nacheinander in Transportrichtung zur Endseite transportiert werden.

11. Behältertransportvorrichtung (1) nach einem der vorangegangenen Ansprüche 1 bis 9, wobei die Haltervorschubeinrichtung (20) gleichzeitig alle Behälterhalter (10), die von dem nach außen führenden Halterstützelement (14) und/oder dem nach innen führenden Halterstützelement (15) getragen werden, in Transportrichtung in Richtung auf die Endseite hin fördern.

12. Behältertransportvorrichtung (1) nach einem der vorangegangenen Ansprüche 1 bis 10, wobei die Haltervorschubeinrichtung (20) als Haltervorschubelement (21) ausgelegt ist, welches sich unter einem gegebenen Hub hin- und herbewegt, so daß der an einem Anfangsende oder an Anfangsenden des nach außen führenden Halterstützelements (15) und/oder des nach innen führenden Halterstützelements (14) positionierte Behälterhalter (10) in einem Außereingriffszustand in Richtung auf eine Endseite oder Endseiten vorgeschoben wird.

13. Behältertransportvorrichtung (1) nach einem der vorangegangenen Ansprüche 1 bis 11, wobei die Haltervorschubeinrichtung (20) ein Haltereingriffs- und -vorschubelement (21) aufweist, welches sich unter einem gegebenen Hub hin- und herbewegt, so daß es einen, zwei oder mehr Behälterhalter (10), die an einer Anfangsseite oder an Anfangsseiten des nach außen führenden Halterstützelements (14) und/oder des nach innen führenden Halterstützelements (15) angeordnet ist bzw. sind, in einem Zustand, in welchem das Haltereingriffs- und -vorschubelement (21) mit dem Behälterhalter (10) in Eingriff ist, zu den Endseiten hin fördert.

14. Behältertransportvorrichtung (1) nach Anspruch 13, wobei das Haltereingriffs- und -vorschubelement (21) einen vorspringenden Eingriffs- und Vorschubabschnitt aufweist, welcher den Behälterhalter (10) durch Ineingrifftreten mit einem ausgesparten Abschnitt oder einer Öffnung, der bzw. die in dem Behälterhalter (10) ausgebildet ist, fördern kann.

15. Behältertransportvorrichtung (1) nach Anspruch 13 oder 14, wobei das Haltereingriffs- und -vorschubelement (21) so ausgelegt ist, daß es die Hin-und-Her-Bewegung und die normale und umgekehrte Bewegung wiederholt, durch welche das Haltereingriffs- und -vorschubelement (21) um einen gegebenen Hub in einem Zustand vorwärtsbewegt wird, in welchem das Haltereingriffs- und -vorschubelement (21) mit einem ausgesparten Abschnitt oder einer Öffnung, der bzw. die in dem Behälterhalter (10) ausgebildet ist, in Eingriff kommt und danach gedreht wird, um in einen Außereingriffszustand überzugehen, in welchem das Haltereingriffs- und -vorschubelement (21) nicht mit dem ausgesparten Abschnitt oder der Öffnung in Eingriff ist, und danach um einen gegebenen Hub in den Außereingriffszustand zurückgezogen wird und in einer umgekehrten Richtung gedreht wird, um in den Eingriffszustand einzutreten und **dadurch** den Behälterhalter (10) zu fördern.

16. Behältertransportvorrichtung (1) nach Anspruch 13 oder 14, wobei das Haltereingriffs- und -vorschubelement (21) so ausgelegt ist, daß es die kastenartige Bewegung wiederholt, durch welche das Haltereingriffs- und -vorschubelement (21) um einen gegebenen Hub in einen Zustand vorwärtsbewegt wird, in welchem das Haltereingriffs- und -vorschubelement (21) mit einem ausgesparten Abschnitt oder einer Öffnung, der bzw. die in dem Behälterhalter (10) ausgebildet ist, in Eingriff ist, und danach angehoben wird, um in einen Außereingriffszustand überzugehen, in welchem das Haltereingriffs- und -vorschubelement (21) nicht mit dem ausgesparten Abschnitt oder der Öffnung in Eingriff ist, und danach um einen gegebenen Hub in den Außereingriffszustand zurückgezogen wird und abgesenkt wird, um in den Eingriffszustand überzugehen und **dadurch** den Behälterhalter (10) zu fördern.

17. Behältertransportvorrichtung (1) nach einem der vorangegangenen Ansprüche 1 bis 8, wobei die Haltervorschubeinrichtung (20) so ausgelegt ist, daß sie ein Paar von Scheiben (31) oder einen säulenförmigen Körper aufweist mit ausgesparten Abschnitten oder vorspringenden Abschnitten an äußeren peripheren Oberflächen desselben und mit einer Antriebswelle, und die ausgesparten Abschnitte oder die vorspringenden Abschnitte mit entsprechenden vorspringenden Abschnitten oder ausgesparten Abschnitten in Eingriff sind, die auf dem Behälterhalter (10) ausgebildet sind, und der Behälterhalter (10) durch die Drehung der Antriebswellen gefördert wird.

18. Behältertransportvorrichtung (1) nach einem der vorangegangenen Ansprüche 1 bis 8, wobei die Haltervorschubeinrichtung (20) so ausgelegt ist, daß sie drehbare Schraubenelemente (27) aufweist, welche auf äußeren peripheren Oberflächen davon Gewindespitzen bilden, und zwischen den Gewindespitzen ausgebildete Gewindevertiefungen mit Gewindeeingriffsabschnitten (13) in Eingriff sind, die auf beiden äußeren Seitenflächen des Behälterhalters (10) ausgebildet sind, und der Behälterhalter (10) durch Drehen der Schraubenelemente (27) gefördert wird.

19. Behältertransportvorrichtung (1) nach einem der vorangegangenen Ansprüche 1 bis 18, wobei die Behältertransportvorrichtung (1) so ausgelegt ist, daß sie auf einer Befüllungs- und Verpackungsmaschine montiert ist, welche Inhalte in den Behälter einfüllt und die Inhalte verpackt.

## Revendications

1. Dispositif (1) sans chaîne de transport de récipient comprenant :
une pluralité de dispositifs (10) du type plaque de maintien de récipient qui maintiennent un, deux ou davantage de récipients ;
un élément (14) de support de dispositif de maintien sortant et un élément (15) de support de dispositif de maintien entrant qui s'étendent dans la direction de transport pour supporter la pluralité de dispositifs de maintien de récipient dans un état dans lequel les dispositifs de maintien de récipient sont mobiles selon la direction de transport ;
des premiers moyens de transfert (30) qui sont prévus entre une extrémité terminale de l'élément de support de dispositif de maintien sortant et une extrémité de début de l'élément de support de dispositif de maintien entrant et qui sont agencés pour transférer séquentiellement les dispositifs de maintien de récipient qui sont supportés et transportés par l'élément de support de dispositif de maintien sortant vers l'élément de support de dispositif de maintien entrant ;
des deuxièmes moyens de transfert (39) qui sont prévus entre une extrémité terminale de l'élément de support de dispositif de maintien entrant et une extrémité de début de l'élément de support de dispositif de maintien sortant et qui sont agencés pour transférer séquentiellement les dispositifs de maintien de récipient qui sont supportés et transportés par l'élément de support de dispositif de maintien entrant vers l'élément de support de dispositif de maintien sortant ; et
des moyens (20) d'avance de dispositif de maintien qui avancent et transportent la pluralité de dispositifs de maintien de récipient supportés par l'élément de support de dispositif de maintien sortant et/ou par l'élément de support de dispositif de maintien entrant de sorte que les dispositifs de maintien de récipient respectifs puissent circuler dans l'ordre dans l'élément de support de dispositif de maintien sortant, les premiers moyens de transfert, l'élément de support de dispositif de maintien entrant, les deuxièmes moyens de transfert, l'élément de support de dispositif de maintien sortant ;
dans lequel l'élément (15) de support de dispositif de maintien entrant est agencé au-dessous de l'élément (14) de support de dispositif de maintien sortant ;
**caractérisé en ce que** :
les premiers moyens de transfert (30) et/ou les deuxièmes moyens de transfert (39) comprennent une paire de disques (31) ou un corps colonnaire qui comporte des parties en retrait ou des parties saillantes sur ses surfaces périphériques externes, les parties en retrait (32) ou les parties saillantes étant formées en correspondance avec les parties saillantes (12) ou les parties en retrait formées sur les dispositifs de maintien de récipient, et les dispositifs de maintien de récipient étant guidés et
transférés par la rotation de la paire de disques ou du corps colonnaire autour d'un axe horizontal.

2. Dispositif (1) de transport de récipient selon la revendication 1, dans lequel les dispositifs (10) de maintien de récipient sont configurés de sorte qu'un, deux ou davantage de récipients soient maintenus par deux dispositifs de maintien de récipient.

3. Dispositif (1) de transport de récipient selon la revendication 1 ou 2, dans lequel le dispositif (10) de maintien de récipient comporte une, deux ou davantage de parties de contact qui sont partiellement mises en contact avec le dispositif de maintien de récipient voisin.

4. Dispositif (1) de transport de récipient selon l'une quelconque des revendications 1 à 3 précédentes, dans lequel le dispositif (10) de maintien de récipient comporte une, deux ou davantage de parties en retrait ou ouvertures qui sont mises en prise avec les moyens (20) d'avance de dispositif de maintien.

5. Dispositif (1) de transport de récipient selon l'une quelconque des revendications 1 à 4 précédentes, dans lequel l'élément de support de dispositif (14) de maintien sortant et/ou l'élément (15) de support de dispositif de maintien entrant sont constitués d'un, de deux ou de davantage de rails de guidage qui supportent de manière coulissante les dispositifs (10) de maintien de récipient sur les surfaces supérieures de ceux-ci.

6. Dispositif (1) de transport de récipient selon l'une quelconque des revendications 1 à 4 précédentes, dans lequel l'élément (14) de support de dispositif de maintien sortant et/ou l'élément (15) de support de dispositif de maintien entrant sont constitués de deux rails de guidage qui supportent de manière coulissante les deux parties d'extrémité du dispositif (10) de maintien de récipient dans la direction perpendiculaire à la direction de transport du dispositif (10) de maintien de récipient.

7. Dispositif (1) de transport de récipient selon l'une quelconque des revendications 1 à 6 précédentes, dans lequel l'élément de support de dispositif (14) de maintien sortant et/ou l'élément (15) de support de dispositif de maintien entrant comprennent des rouleaux pour réduire un coefficient de frottement de coulissement des parties de contact de ceux-ci avec le dispositif (10) de maintien de récipient.

8. Dispositif (1) de transport de récipient selon l'une quelconque des revendications 1 à 7 précédentes, dans lequel l'élément (15) de support de dispositif de maintien entrant est agencé de manière inclinée de sorte que le dispositif (10) de maintien de récipient supporté par l'élément de support de dispositif (15) de maintien entrant est transporté d'un côté d'extrémité de début vers un côté de terminal du fait d'un poids mort de celui-ci.

9. Dispositif (1) de transport de récipient selon l'une quelconque des revendications 1 à 8 précédentes, dans lequel les moyens (20) d'avance de dispositif de maintien sont configurés pour être capables d'avancer et de transporter par intermittence les dispositifs (10) de maintien de récipient respectifs supportés sur l'élément de support de dispositif (14) de maintien sortant vers le côté de terminal dans la direction de transport avec un pas donné.

10. Dispositif (1) de transport de récipient selon l'une quelconque des revendications 1 à 9 précédentes, dans lequel les moyens (20) d'avance de dispositif de maintien sont agencés des côtés d'extrémité de début de l'élément de support de dispositif (14) de maintien sortant et/ou de l'élément (15) de support de dispositif de maintien entrant, le dispositif de maintien de récipient positionné à l'extrémité de début est avancé vers le côté de terminal dans la direction de transport, et la pluralité de dispositifs (10) de maintien de récipient qui sont positionnés à proximité les uns des autres sont transportés séquentiellement vers le côté de terminal dans la direction de transport par le dispositif (10) de maintien de récipient avancé.

11. Dispositif (1) de transport de récipient selon l'une quelconque des revendications 1 à 9 précédentes, dans lequel les moyens (20) d'avance de dispositif de maintien avancent simultanément tous les dispositifs (10) de maintien de récipient supportés par l'élément (14) de support de dispositif de maintien sortant et/ou par l'élément (15) de support de dispositif de maintien entrant vers le côté de terminal dans la direction de transport.

12. Dispositif (1) de transport de récipient selon l'une quelconque des revendications 1 à 10 précédentes, dans lequel les moyens (20) d'avance de dispositif de maintien sont configurés en tant qu'élément (21) de poussée de dispositif de maintien qui se déplace en va-et-vient sur une course donnée de manière à pousser le dispositif (10) de maintien de récipient positionné à une extrémité de début ou aux extrémités de début de l'élément (15) de support de dispositif de maintien sortant et/ou de l'élément (14) de support de dispositif de maintien entrant vers un côté de terminal ou les côtés de terminal dans un état non en prise.

13. Dispositif (1) de transport de récipient selon l'une quelconque des revendications 1 à 11 précédentes, dans lequel les moyens (20) d'avance de dispositif de maintien comprennent un élément (21) de mise en prise et de poussée de dispositif de maintien qui se déplace en va-et-vient sur une course donnée de manière à avancer un, deux ou davantage de dispositifs (10) de maintien de récipient positionnés d'un côté d'extrémité de début ou des côtés d'extrémité de début de l'élément (14) de support de dispositif de maintien sortant et/ou de l'élément (15) de support de dispositif de maintien entrant vers les côtés de terminal dans un état dans lequel l'élément (21) de mise en prise et de poussée de dispositif de maintien est en prise avec le dispositif (10) de maintien de récipient.

14. Dispositif (1) de transport de récipient selon la revendication 13, dans lequel l'élément (21) de mise en prise et de poussée de dispositif de maintien comprend une partie saillante de mise en prise et de poussée qui est capable d'avancer le dispositif (10) de maintien de récipient en étant en prise avec une partie en retrait ou une ouverture formée dans le dispositif (10) de maintien de récipient.

15. Dispositif (1) de transport de récipient selon la revendication 13 ou 14, dans lequel l'élément (21) de mise en prise et de poussée de dispositif de maintien est configuré pour répéter le déplacement en va-et-vient et le déplacement en rotation normal et inverse dans lesquels l'élément (21) de mise en prise et de poussée de dispositif de maintien est avancé d'une course donnée dans un état dans lequel l'élément (21) de mise en prise et de poussée de dispositif de maintien est en prise avec une partie en retrait ou une ouverture formée dans le dispositif (10) de maintien de récipient et, ensuite, est entraîné en rotation pour adopter un état non en prise dans lequel l'élément (21) de mise en prise et de poussée de dispositif de maintien n'est pas en prise avec la partie en retrait ou l'ouverture et, ensuite, est rétracté d'une course donnée dans l'état non en prise, et est entraîné en rotation dans une direction inverse pour adopter l'état en prise, avançant ainsi le dispositif (10) de maintien de récipient.

16. Dispositif (1) de transport de récipient selon la revendication 13 ou 14, dans lequel l'élément (21) de mise en prise et de poussée de dispositif de maintien est configuré pour répéter le déplacement selon un cadre dans lequel l'élément (21) de mise en prise et de poussée de dispositif de maintien est avancé d'une course donnée dans un état dans lequel l'élément (21) de mise en prise et de poussée de dispositif de maintien est en prise avec une partie en retrait ou une ouverture formée dans le dispositif (10) de maintien de récipient et, ensuite, est élevé pour adopter un état non en prise dans lequel l'élément (21) de mise en prise et de poussée de dispositif de maintien n'est pas mis en prise avec la partie en retrait ou l'ouverture et, ensuite, est rétracté d'une course donnée dans l'état non en prise, et est abaissé pour adopter l'état en prise, avançant ainsi le dispositif (10) de maintien de récipient.

17. Dispositif (1) de transport de récipient selon l'une quelconque des revendications 1 à 8 précédentes, dans lequel les moyens (20) d'avance de dispositif de maintien sont configurés pour comprendre une paire de disques (3 1) ou un corps colonnaire qui comporte des parties en retrait ou des parties saillantes sur les surfaces périphériques externes de celui-ci et un arbre d'entraînement, et les parties en retrait ou les parties saillantes engrènent avec des parties saillantes ou des parties en retrait correspondantes formées sur le dispositif (10) de maintien de récipient et le dispositif (10) de maintien de récipient est avancé par la rotation des arbres d'entraînement.

18. Dispositif (1) de transport de récipient selon l'une quelconque des revendications 1 à 8 précédentes, dans lequel les moyens (20)d'avance de dispositif de maintien sont configurés pour comprendre des éléments (27) formant vis rotatifs qui comportent des sommets de filet sur les surfaces périphériques externes de ceux-ci, et les fonds de filet formés entre les sommets de filet sont mis en prise avec des parties (13) de mise en prise de filet formées sur les deux surfaces latérales externes du dispositif (10) de maintien de récipient, et le dispositif (10) de maintien de récipient est avancé par la rotation des éléments (27) formant vis.

19. Dispositif (1) de transport de récipient selon l'une quelconque des revendications 1 à 18 précédentes, dans lequel le dispositif (1) de transport de récipient est configuré pour être monté sur une machine de remplissage et d'emballage qui introduit un contenu dans le récipient et emballe le contenu.
